# EUROPEAN PATENT APPLICATION

(11) **EP 1 306 534 A2**
(43) Date of publication of application: **02.05.2003**
(21) Application number: 02011610.9
(22) Date of filing: 28.05.2002
(51) Int. Cl.: F02B 37/007

(54) **Engine supercharging system**

(30) Priority: 24.10.2001 JP 2001326839
(71) Applicant: Hitachi, Ltd., Chiyoda-ku, Tokyo 101-8010 (JP)
(72) Inventor: Yamaguchi, Jun'ichi, Naka-gun, Ibaraki 319-1111 (JP); Onishi, Koji, Hitachinaka-shi, Ibaraki 312-0041 (JP); Abo, Matsuharu, Hitachinaka-shi, Ibaraki 312-0062 (JP)
(74) Representative: Beetz & Partner Patentanwälte

(57) **Abstract**

The present invention relates to an engine supercharging system and is intended to sufficiently fulfill the supercharging function at the time of either of low speed running of the engine and high speed running and realizing output improvement or fuel expense reduction. The present invention has the engine (101) having the jet mechanism for directly jetting fuel into the cylinder (101a), the first turbo supercharger (104) for supercharging the engine (101) at the time of low speed rotation, the second turbo supercharger (105) for supercharging at the time of high speed rotation, the first and second exhaust control valves (106 and 107) for selecting exhaust paths relating to the first and second turbo superchargers (104 and 105) and controlling the exhaust gas flow rate.

## Description

### BACKGROUND OF THE INVENTION:

### <Field of the Invention>

The present invention relates to an engine supercharging system for supercharging an engine which directly jets fuel into a cylinder and burns by ignition.

### <Prior Art>

Conventionally, for example, an internal-combustion engine with a turbo supercharger for supercharging intake air by a turbo supercharger composed of a compressor connected to a turbine installed in an exhaust path and a turbine installed in an air intake path is widely known.

In recent years, an engine for directly jetting fuel into a cylinder has been widely used. As an engine that the output of this direct jet engine is improved by supercharging, for example, the engine supercharging system described in Japanese Application Patent Laid-open Publication No. Hei 10-89106 is available.

This engine supercharging system has a jet mechanism for directly jetting fuel into the cylinder, an engine having a first exhaust valve and a second exhaust valve in each of a plurality of cylinders, and a supercharger having a small turbine and the first exhaust valve of each cylinder is connected to the supercharger and the second exhaust valve is directly connected to the exhaust tube. And, at the time of low speed rotation (low speed running) of the engine, the second valves are closed, and the first exhaust valves are opened, and exhaust gas is sent to the turbine of the supercharger, and the engine is supercharged. At the time of high speed rotation (high speed running), the first and second exhaust valves are opened by deviating the valve opening time.

In such a constitution, when the capacity of the turbine of the supercharger is made smaller, even at the time of high load at low speed of the engine, high torque is obtained and at the time of high speed running of the engine, exhaust gas in correspondence to excess supply to the turbine is directly derived from the second exhaust valve into the exhaust tube, thus the exhaust pressure id reduced and output reduction is prevented.

In the aforementioned prior art, a problem as indicated below arises.

Namely, as mentioned above, by use of a small turbine, at the time of low speed running of the engine, the supercharging function is fulfilled sufficiently and for example, at the time of high load, an output improvement action is obtained and at the time of low load, a heat expense improvement action is obtained. However, on the other hand, at the time of high speed running, exhaust gas is excessively supplied to the small turbine and if it is left alone, the output is inversely reduced due to an increase in the exhaust pressure, so that to prevent it, exhaust gas is discharged into the exhaust tube as it is from the second valve not via the supercharger. As a result, at the time of high speed running, the supercharging function can be little fulfilled and the original role of the turbo engine, for example, the output improvement effect at the time of high load at high speed cannot be obtained.

### SUMMARY OF THE INVENTION:

The present invention is intended to provide an engine supercharging system for sufficiently fulfilling the supercharging function at the time of either of low speed running of the engine and high speed running and realizing output improvement or fuel expense reduction.
(1) To accomplish the above object, the engine supercharging system of the present invention has an engine having a jet mechanism for directly jetting fuel into a cylinder, at least two supercharging mechanisms including a first supercharging mechanism for supercharging the engine at the time of low speed rotation and a second supercharging mechanism for supercharging at the time of high speed rotation, a plurality of exhaust control valves for selecting exhaust paths relating to the first and second supercharging mechanisms and controlling the exhaust gas flow rate, and/or a valve control means for controlling the switching operation of the exhaust control valves so as to realize desired combustion of either of lamination combustion for jetting and burning fuel in the compression process of the cylinder and homogeneous combustion for jetting and burning fuel in the air intake process of the cylinder using at least desired one of the first and second supercharging mechanisms according to the operation conditions of the engine.
   In the present invention, according to the engine operation conditions, the valve control means controls a plurality of exhaust control valves, selects exhaust paths relating to the first and second supercharging mechanisms, and controls the exhaust gas flow rate, thus the lamination combustion or homogeneous combustion is executed in the cylinder of the engine. By doing this, at the time of low speed rotation (low speed running), for example, the first supercharging mechanism having a small capacity turbine is used mainly, thus even if the exhaust gas flow rate is low, the turbine is rotated sufficiently and the engine is supercharged well responsively, and at the time of low load, fuel is jetted in the compression process, and the lamination combustion is executed in the cylinder, and the fuel expense is reduced, and at the time of high load, fuel is jetted in the air intake process, and the homogeneous combustion is executed in the cylinder, and the output is improved. Further, at the time of high speed rotation (high speed running), the small capacity turbine of the first supercharging mechanism is saturated, so that for example, the second supercharging mechanism having a large capacity turbine is mainly used, and the engine is supercharged, and in the same way as with the aforementioned, at the time of low load, the lamination combustion is executed in the cylinder, and the fuel expense is reduced, and at the time of high load, the homogeneous combustion is executed in the cylinder, and the output is improved similarly to an ordinary turbo engine.
   In this way, the supercharging function is fulfilled sufficiently at either of low speed running of the engine and high speed running and the output improvement or fuel expense reduction is realized.
(2) To accomplish the above object, the engine supercharging system of the present invention further has an engine having a jet mechanism for directly jetting fuel into a cylinder, at least two supercharging mechanisms including a first supercharging mechanism for supercharging the engine at the time of low speed rotation and a second supercharging mechanism for supercharging at the time of high speed rotation, a plurality of exhaust control valves for selecting exhaust paths relating to the first and second supercharging mechanisms and controlling the exhaust gas flow rate, and/or a valve control means for controlling the switching operation of the exhaust control valves so as to realize desired combustion of either of lamination combustion for jetting and burning fuel in the compression process of the cylinder and homogeneous combustion for jetting and burning fuel in the air intake process of the cylinder using at least desired one of the first and second supercharging mechanisms according to the number of rotations and load of the engine.
(3) In (1) or (2) mentioned above, it is preferable that at least the two supercharging mechanisms mentioned above are turbo chargers and the capacity of the first supercharging mechanism is between 1/5 and 1/2 of the capacity of the second supercharging mechanism.
   By doing this, the turbine of the first supercharging mechanism can be miniaturized and the manufacturing cost of the turbine can be suppressed to about 2/3 of that of the second supercharging mechanism. Therefore, compared with a case that two ordinary turbines are used, the cost can be reduced.
(4) In (1) or (2) mentioned above, it is further preferable that at least the two supercharging mechanisms mentioned above are turbo chargers and the clearance between the turbine and the housing of the second supercharging mechanism is 1.5 times or more of the clearance between the turbine and the housing of the first supercharging mechanism.
   For example, when one turbine is intended to cover as a wider range as possible from the low speed rotation region to the high speed rotation region, from the viewpoint of control accuracy improvement, the clearance between the turbine and the housing must be manufactured very small and accurately. On the other hand, according to the present invention, as explained in (1), the valve control means controls the switching operation of the exhaust control valves and switches the supercharging mechanism which is mainly used according to the operation conditions of the engine, thus combustion in an optimal and desired state can be executed. Therefore, even if the turbine having a comparatively large capacity of the second supercharging mechanism is manufactured with comparatively low accuracy such that the clearance between the turbine and the housing thereof is 1.5 times or more of the clearance between the turbine and the housing of the first supercharging mechanism, the engine can be supercharged sufficiently. Therefore, the manufacturing cost can be reduced in correspondence to a reduction in the manufacturing accuracy of the second supercharging mechanism.
(5) In any one of (1) to (4) mentioned above, it is further preferable that the system further has a selection means for selecting an acceleration priority mode or a fuel expense priority mode by a driver and the valve control means controls the switching operation of the exhaust control valves according to the selection result of the selection means.
   As explained above in (1), at the time of low speed rotation (low speed running), for example, the first supercharging mechanism having a small capacity turbine is used mainly, thus the engine is supercharged well responsively, and at the time of high speed rotation (high speed running), for example, the second supercharging mechanism having a large capacity turbine is mainly used, and the engine is supercharged, while at the time of medium speed running, a region where either of the first supercharging mechanism and second supercharging mechanism can be used is generated. In this case, generally, when the small capacity turbine is used, the exhaust pressure is increased and the fuel expense is increased, though the response is high, while when the large capacity turbine is used, the fuel expense is inversely decreased, though the response is inferior to that of the small capacity turbine. Therefore, according to the present invention, depending on the intention of a driver, for example, which is to be used, the first supercharging mechanism or the second supercharging mechanism is decided by the selection means, thus the engine performance can be provided according to a requirement of the driver such as acceleration priority or fuel expense priority.
(6) In any one of (1) to (4) mentioned above, it is further preferable that the system further has a judgment means for detecting state amount (accelerator opening, gear position, car speed, etc.) information relating to the driving operation and judging the intention of a driver from the information and the valve control means controls the switching operation of the exhaust control valve according to the intention of the driver judged by the judgment means.
(7) In any one of (1) to (6) mentioned above, it is further preferable that the system further has a main catalyst connected to the exhaust path and an auxiliary catalyst mainly used at the start time of the engine and the valve control means controls the plurality of exhaust control valves so as to supply exhaust gas to the main catalyst or auxiliary catalyst in priority by bypassing at least the aforementioned two supercharging mechanisms at the start time of the engine or at the time of low temperature.
   By doing this, the temperature rise, that is, activation of the catalyst at the start time of the engine (warming up) or at the time of low temperature is expedited and exhaust gas can be purified.
(8) In any one of (1) to (6) mentioned above, it is further preferable that the system further has a main catalyst connected to the exhaust path and an auxiliary catalyst mainly used at the start time of the engine and the auxiliary catalyst is arranged in the path of the exhaust path which bypasses the first supercharging mechanism.
(9) In any one of (1) to (6) mentioned above, it is further preferable that the system further has a main catalyst connected to the exhaust path and an auxiliary catalyst mainly used at the start time of the engine and the auxiliary catalyst is arranged in the path of the exhaust path which bypasses the second supercharging mechanism.
(10) In (1) or (2) mentioned above, it is further preferable that the first supercharging mechanism is a machine supercharger and the second supercharging mechanism is a turbo charger.
(11) To accomplish the above object, the engine supercharging system of the present invention further has an engine having a jet mechanism for directly jetting fuel into a cylinder, at least one supercharging turbine mechanism, and a jet control means for controlling the jet mechanism so as to execute at least two times of fuel jet including the first fuel jet in the air intake process of the cylinder or the compression process and the second fuel jet in the expansion process of the cylinder or the exhaust process every cycle or intermittently every a predetermined number of cycles.

As mentioned above, generally, when the small capacity turbine is used, the response at the time of low speed running is improved, while at the time of high speed running, the exhaust pressure is increased and the fuel expense is increased, and when the large capacity turbine is used, the response at the time of low speed running is inferior to that of the small capacity turbine. Therefore, according to the present invention, for example, one large capacity turbine is used and the jet control means executes the first fuel jet from the jet mechanism in the air intake or compression process of the cylinder, obtains engine torque, and then executes the second fuel jet in the expansion or exhaust process of the cylinder.

The fuel jetted at the second time does not produce engine torque, though it has a function to burn in the high-temperature cylinder or exhaust tube and increase the energy of exhaust gas. By doing this, the number of rotations of the turbine can be increased faster, so that even when the large capacity turbine is used as mentioned above, the response at the time of low speed running can be improved.

As a result, in the same way as with (1) mentioned above, in a case of low speed running and low load, fuel is jetted in the compression process, and lamination combustion is carried out in the cylinder, and the fuel expense is reduced, and in a case of high load, fuel is jetted in the air intake process, and homogeneous combustion is carried out in the cylinder, and the output is improved, and in a case of high speed running and low load, lamination combustion is carried out in the cylinder, and the fuel expense is reduced, and in a case of high load, homogeneous combustion is carried out in the cylinder, and the output is improved. Namely, in both cases of low speed running of the engine and high speed running, the supercharging function is fulfilled sufficiently and output improvement and fuel expense reduction can be realized.

### BRIEF DESCRIPTION OF THE DRAWINGS:

Fig. 1 is a conceptual system block diagram showing the whole rough constitution of an embodiment of the engine supercharging system of the present invention.
Fig. 2 is a flow chart showing the control procedure for the engine, first exhaust control valve, and second exhaust control valve by the controller in an embodiment of the engine supercharging system of the present invention.
Fig. 3 is a detailed drawing showing the operation state of the first and second exhaust control valves at low temperature in an embodiment of the engine supercharging system of the present invention.
Fig. 4 is a detailed drawing showing the operation state of the first and second exhaust control valves when exhaust gas flows in the first turbine in an embodiment of the engine supercharging system of the present invention.
Fig. 5 is a flow chart showing the detailed procedure of the turbine operation in the low speed rotation region in an embodiment of the engine supercharging system of the present invention.
Fig. 6 is a flow chart showing the detailed procedure of the turbine operation in the medium speed rotation region in an embodiment of the engine supercharging system of the present invention.
Fig. 7 is a detailed drawing showing the operation state of the first and second exhaust control valves when exhaust gas flows in the first turbine and the second turbine is pre-rotated in an embodiment of the engine supercharging system of the present invention.
Fig. 8 is a detailed drawing showing the operation state of the first and second exhaust control valves when exhaust gas flows in the second turbine and the first turbine is pre-rotated in an embodiment of the engine supercharging system of the present invention.
Fig. 9 is a flow chart showing the detailed procedure of the turbine operation in the high speed rotation region in an embodiment of the engine supercharging system of the present invention.
Fig. 10 is a drawing showing the running region on the number of rotations - torque map when a turbo supercharger having one conventional turbine having a comparatively large capacity is applied to a direct jet engine having a mechanism for jetting fuel directly into the cylinder in a comparison example of an embodiment of the engine supercharging system of the present invention.
Fig. 11 is a drawing showing the running region on the number of rotations - torque map when the mode is the response priority mode in an embodiment of the engine supercharging system of the present invention.
Fig. 12 is a drawing showing the running region on the number of rotations - torque map when the mode is the fuel expense priority mode in an embodiment of the engine supercharging system of the present invention.
Fig. 13 is a system block diagram showing the whole rough constitution of a deformation example of an embodiment of the engine supercharging system of the present invention.
Fig. 14 is a system block diagram showing the whole rough constitution of another deformation example of an embodiment of the engine supercharging system of the present invention.
Fig. 15 is a conceptual system block diagram showing the whole rough constitution of another embodiment of the engine supercharging system of the present invention.
Fig. 16 is a flow chart showing the control procedure for the engine and second exhaust control valve by the controller in another embodiment of the engine supercharging system of the present invention.
Fig. 17 is a drawing showing an example of the number of rotations - torque characteristic as a running region on the number of rotations - torque map in another embodiment of the engine supercharging system of the present invention.

### DESCRIPTION OF THE INVENTION:

The embodiments of the present invention will be explained hereunder with reference to the accompanying drawings.

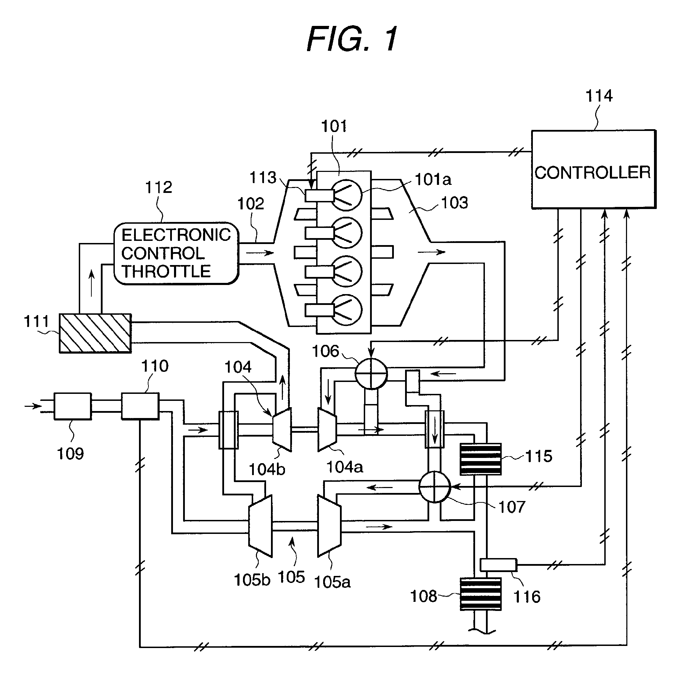

The first embodiment of the present invention will be explained by referring to Figs. 1 to 14.

Fig. 1 is a system block diagram showing the whole rough constitution of the engine supercharging system of this embodiment. In Fig. 1, a fuel jet valve 113 is attached to an engine 101 so as to directly jet fuel to a cylinder 101a of the engine 101.

In the engine 101, in the air intake process, the air intake valve (not shown in the drawing) opens and the piston (not shown in the drawing) moves down and inhales air. In this case, when homogeneous combustion is to be carried out, fuel is jetted at this timing and mixing of fuel and air in the cylinder is sufficiently expedited via the nest compression process, so that the air use rate is high and high torque can be generated. Then, in the compression process, the air intake valve is closed, and the piston moves up, and the air in the cylinder is compressed. In this case, when lamination combustion is to be carried out, fuel is jetted at this timing, and a region having a high air to fuel ratio is formed in the neighborhood of the ignition plug (not shown in the drawing), and even if the air to fuel ratio is low as a whole, satisfactory combustion is realized. The air amount is large, so that the pumping loss is reduced and the heat transferred from the mixed gas to the cylinder is reduced. Namely, the cooling loss is reduced, so that when the same torque is to be generated in the partial load region, the fuel expense is reduced than that when the air amount is reduced and homogeneous combustion is carried out.

Air sucked in for combustion of the engine 101 passes through an air cleaner 109, is measured for the intake air amount by an air flowmeter 110, compressed by compressors 104b and 105b respectively connected to a turbine (hereinafter referred to as a first turbine) 104a of a first turbo supercharger 104 or a turbine (hereinafter referred to as a second turbine) 105a of a second turbo supercharger 105, then cooled by an inter-cooler 111, adjusted in the flow rate by an electronic control throttle 112, and sent to the engine 101 through an air intake tube 102.

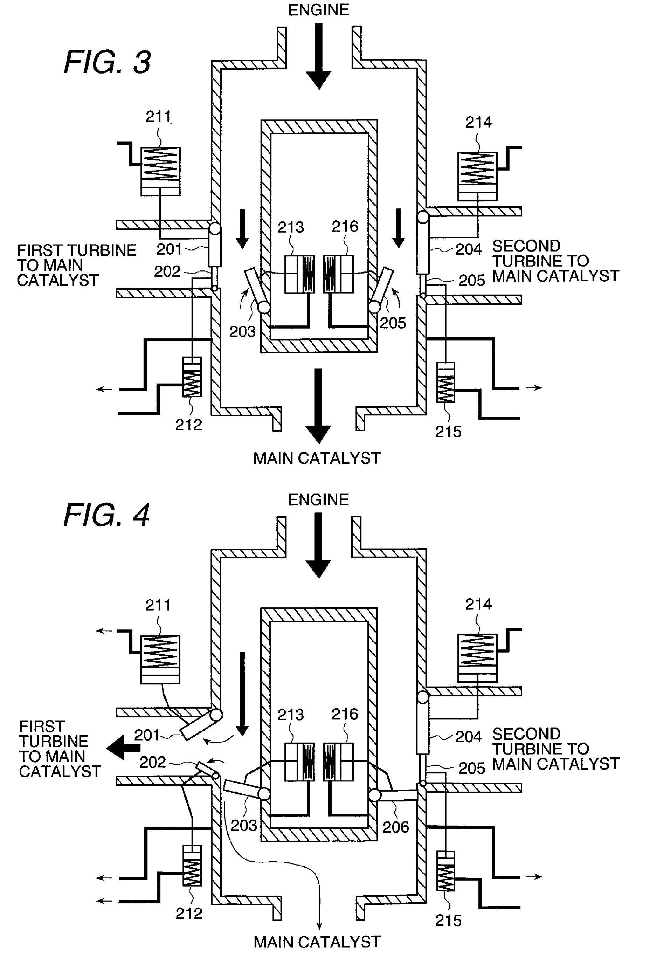

On the other hand, exhaust gas ejected from the engine 101 passes through an exhaust tube 103 and is sent to the first turbine 104a or the second turbine 105a. To select this path, a first exhaust control valve 106 and a second exhaust control valve 107 (for a detailed structure, see Fig. 3) are installed.

Between the air intake tube 102 and the exhaust tube 103, the first turbine 104a having a small capacity and the second turbine 105a having a larger capacity than it are attached and they are arranged in parallel for air intake or air discharge. In this case, the part of the exhaust tube 103 to which the first turbine 104a is attached is made thinner than the part to which the second turbine 105 is attached.

The capacity of the first turbine 104a is structured so as to be 1/2 to 1/5 of the capacity of the second turbine 105a. The clearance between the body of the second turbine 105a and the housing (case) is set to at least 1.5 times of that of the first turbine. When the second turbine 105a is not used, the exhaust path to the second turbine 105a is closed by a second exhaust control valve 107 and by use of pre-rotation of the turbine which will be described later, even if the accuracy of the second turbine is low, sufficient supercharging can be carried out.

On the downstream side of the first turbine 104a, an auxiliary catalyst 115 is attached and on the downstream side where the paths of the first turbine 104a and the second turbine 105a are joined, a main catalyst 108 is attached.

In this case, number 114 indicates, for example, a controller composed of a computer, which, on the base of information of the water temperature and number of rotations of the engine 101, the air intake amount from the air flowmeter 110, and the exhaust temperature from an exhaust temperature sensor 116, outputs an operation signal of the fuel jet valve 113, sends an ignition signal to the ignition coil (not shown in the drawing), and outputs a signal for switching the exhaust control valve 106 of the first turbine 104a and the exhaust control valve 107 of the second turbine 105a.

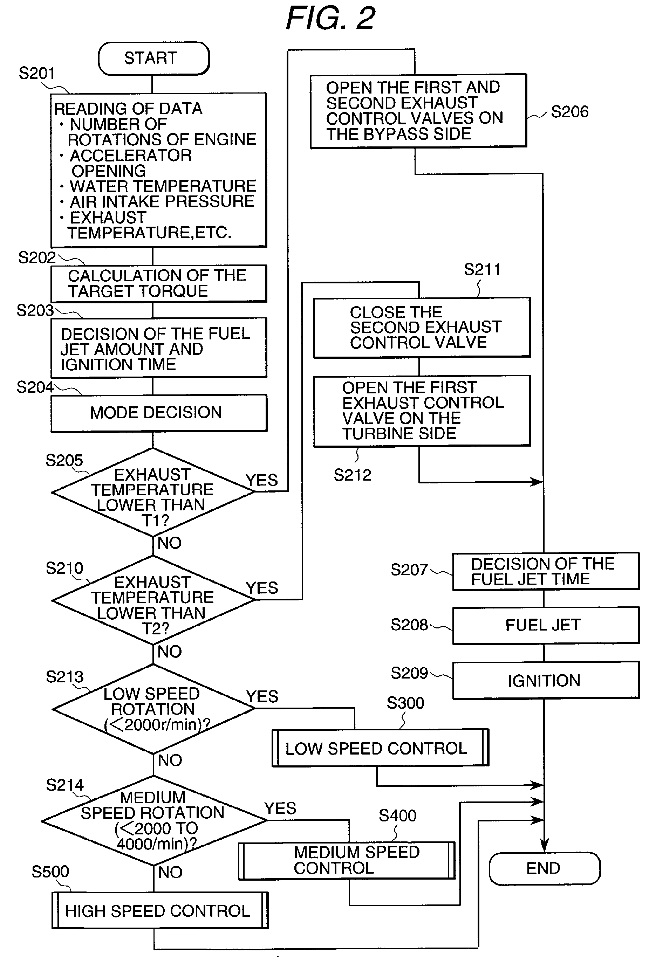

Fig. 2 is a flow chart showing the control procedure for the engine 101, the first exhaust control valve 116, and the second exhaust control valve 117 by the controller 114. Hereunder, for the convenience of explanation, as a typical example, a case that the exhaust rate of the engine 101 is 2 liters will be explained.

In Fig. 2, the controller 114, firstly at the Step 201, reads state amount information relating to the driving operation such as the number of rotations of the engine 101, accelerator opening for controlling the electronic control throttle 112 which is not shown in the drawing, temperature of cooling water for the engine 101, pressure of intake air, temperature of exhaust gas, gear operation position, and car speed from the detection means corresponding to each information which are not shown in the drawing and at Step 202, performs arithmetic on the target torque by a publicly known method as such a kind. Further, the detection information fetching them is used as a material for judging the intention of a driver which will be described later.

And, on the basis of the target torque, the controller 114, at Step 203, decides the fuel jet amount, concretely, the valve opening pulse width of the fuel jet valve 113. Further, the controller 114 sends a switching operation signal to the electronic control throttle 112 and adjusts the intake air amount. Further, the controller 114 decides a rough ignition time of the ignition plug (not shown in the drawing) in the cylinder 101a.

Furthermore, at Step 204, the controller 114, on the basis of state amount information relating to the driving operation such as the number of rotations and history of the required torque of the engine 101 and the aforementioned accelerator opening, judges whether the torque requested by a driver is large or small and when the request torque is large, sets the response priority mode and when the request torque is small and the change thereof is small, sets the fuel expense priority mode (equivalent to the judgment means for judging the intention of the driver). In this case, by a mode change-over switch separately installed in the driver's seat as a selection means, the mode may be switched.

Next, at Step 205, the controller 114 decides whether the exhaust temperature T detected by the exhaust temperature sensor 116 is a fixed temperature T1 or lower.

### (1) At the time of low temperature

When T ≤ T1 (at the time of low temperature, for example, before warming-up of the engine 101), the main catalyst 108 and the auxiliary catalyst 1145 are not activated, so that the controller 114 moves to Step 26, opens the first exhaust control valve 106 and the second exhaust control valve 107 respectively on the bypass side, bypasses the first turbine 104a having a large heat capacity and the second turbine 105a having a particularly large heat capacity, and switches the exhaust path so as to pass through the auxiliary catalyst 115.

Fig. 3 is a detailed drawing showing the operation state of the first and second exhaust control valves 106 and 107 at this time. In Fig. 3, the first exhaust control valve 106 is composed of a first main valve 201, a first auxiliary valve 202, and a first relief valve 203 and these valves are pressed on the close valve side by the force of the springs respectively built in actuators 211, 212, and 213. In the same as with this, the second exhaust control valve 107 is composed of a second main valve 204, a second auxiliary valve 205, and a second relief valve 206 and these valves are pressed on the close valve side by the force of the springs respectively built in actuators 214, 215, and 216. The negative pressure necessary for the operations of the respective actuators 211 to 216 is supplied by the surge tank (not shown in the drawing) connected to the air intake tube 102 of the engine 101. At the time of low temperature, on the basis of a control signal from the controller 114, the negative pressure is supplied to the actuators 213 and 216 of the first and second relief valves 203 and 206 and exhaust gas is bypassed on the side of the main catalyst 108 via the first and second relief valves 203 and 206. By doing this, the main catalyst 108 can be directly warmed up unless the heat energy of exhaust gas is absorbed by the turbines 104a and 105a having a large heat capacity, and the main catalyst 108 rises in temperature early, and exhaust gas can be purified.

Thereafter, at Step 207, the controller 114 decides a detailed fuel jet time in correspondence with the control at Step 26, outputs a control signal to the fuel jet valve 113 at Step 208 so as to jet fuel, outputs a control signal to the ignition plug at Step 209 so as to ignite the ignition plug, lets the engine catch fire and burn, and adjusts this flow.

When the previous decision at Step 205 is satisfied, the controller 114 moves to Step 210 and refers to whether the exhaust temperature T detected by the exhaust temperature sensor 116 is a predetermined temperature T2 or lower. In this case, T2 is a temperature agreeing with the relation T1 < T2 < T3 for the aforementioned T1 and the exhaust temperature T3 after perfect warming up. When T ≤ T2 (for example, during warming-up of the engine 101), the auxiliary catalyst 115 installed on the upstream side of the exhaust tube 103 is activated, so that the harmful component of exhaust gas can be purified using it. Then, the controller 114 moves to Step 211, closes the second exhaust control valve 107, and furthermore opens the first exhaust control valve 106 at Step 212. Fig. 4 is a detailed drawing showing the operation state of the first and second exhaust control valves 106 and 107 at this time. In Fig. 4, firstly, by a signal from the controller 114, negative pressure is supplied to the actuator 212 of the first auxiliary valve 202 and the first auxiliary valve 202 is opened. The opening area of the first auxiliary valve 202 is small, so that it can be opened or closed by comparatively small force. Next, negative pressure is supplied to the actuator 211 of the first main valve 201 and the first main valve 201 is opened. Since the first auxiliary valve 202 is open, the pressure difference between before and after the valve is small and the main valve 201 can be opened or closed by comparatively small force. In this way, exhaust gas from the engine 101 is supplied to the first turbine 104a of the first supercharger 104, and supercharging is carried out, thus even if warming up is not finished completely, sufficient torque can be obtained in the low speed region. When the supercharging pressure reaches a predetermined set value, for example, 150 kPa, negative pressure is supplied to the actuator 213 and the first relief valve 203 is opened. The opening of the valve 203 is controlled by the actuator 213 so that the air intake tube pressure is monitored and it reaches fixed pressure. Exhaust gas passing through the first turbine 104a or the first relief valve 203 in this way passes through the auxiliary catalyst 115 installed on the downstream side thereof and the auxiliary catalyst 115 is already activated even at a low temperature, so that exhaust gas can be purified.

When Step 212 is finished, the controller 114 moves to Step 207 mentioned above and the same control as the aforementioned is executed hereafter.

### (2) At the time of low speed running

On the other hand, when the previous decision at Step 210 is not satisfied, the controller 114 moves to Step 213 and decides whether, for example, the number of rotations N of the engine detected by the engine revolving speed sensor not shown in the drawing is smaller than a predetermined number of rotations on the low revolving speed side, for example, 2000 rpm or not. When N < 2000 rpm, the decision is satisfied and the controller 114 moves to the low speed control step at Step 300.

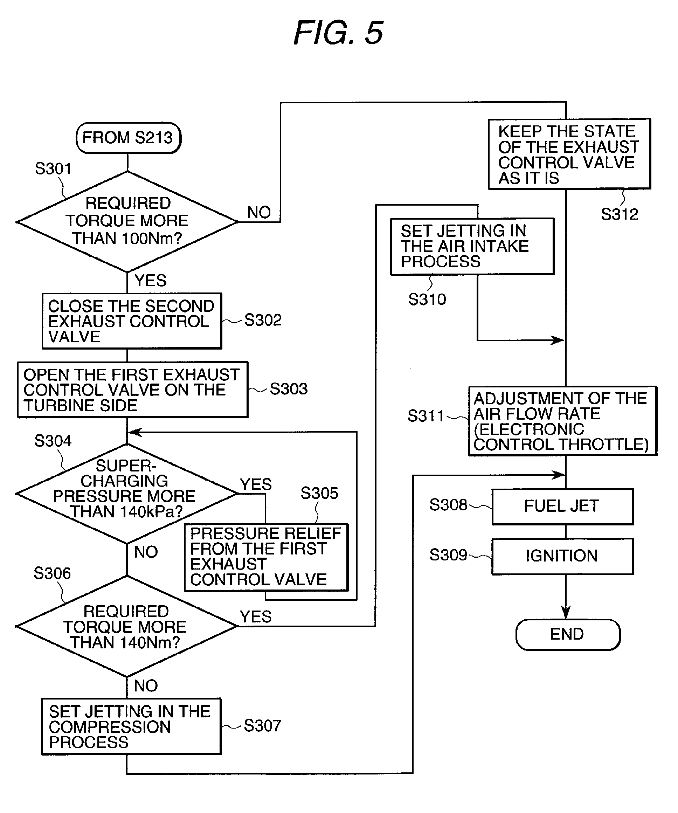

Fig. 5 is a flow chart showing the detailed procedure at Step 300. In Fig. 5, at Step 301 firstly, in the same way as with Step 204, the controller 114, on the basis of information such as the number of rotations and history of the required torque of the engine 101 and accelerator opening, judges whether the torque requested by a driver is large or small.

When the required torque is medium (for example, about 100 Nm in a 2-liter engine) or higher, at Steps 302 and 303, the controller 114 opens the first exhaust control valve 106 on the side of the first turbine 104a having a small capacity and closes the second exhaust control valve 107. The operation state at this time is almost similar to the aforementioned shown in Fig. 4, so that detailed explanation will be omitted. By the aforementioned operation, the first turbine 104a rotates and the supercharging pressure of the air intake tube 112 is increased. Since the capacity of the first turbine 104a is small, even in the region where the exhaust gas flow rate at the time of idle rotation or low speed close to it is low, the turbine 104a can be rotated sufficiently and supercharging can be carried out well responsively.

Thereafter, at Step 304, the controller 114 decides whether the supercharging pressure reaches preset supercharging pressure (for example, 150 kPa) or not and when the decision is satisfied, the controller 114 moves to Step 305, lets a part of exhaust gas flow into the bypass from the first exhaust control valve 106, and prevents the supercharging pressure from excessively increasing.

Thereafter, the controller 114 moves to Step 306 and decides whether the required torque is 140 Nm or more. When the required torque is within the range from 100 to 140 Nm, the decision is not satisfied and the controller 114 moves to Step 307 and sets jetting in the compression process. And, at Step 308, the controller 114 jets fuel in the compression process of the cylinder 1a of the engine 1, generates lamination mixed gas in the cylinder 101a of the engine 101, and ignites in the cylinder 101a from the ignition plug at Step 309 so as to carry out turbo lamination combustion, thus the fuel expense can be reduced.

When the required torque is 140 Nm or more, the decision at Step 306 is satisfied and the controller 114 sets jetting in the air intake process at Step 310, outputs a control signal to the electronic control throttle 112 at Step 311 so as to control the air flow rate, and then carries out turbo homogeneous combustion in the cylinder 101a via Steps 308 and 309, thus high torque can be obtained.

When the required torque is less than, for example, 100 Nm at Step 301, the controller 114 keeps the exhaust control valves 106 and 107 in the current state at Step 312 and goes to Step 311 and the subsequent steps leaving the state as it is.

### (3) At the time of medium speed running

On the other hand, when the previous decision at Step 213 shown in Fig. 2 is not satisfied, the controller 114 moves to Step 214 and decides whether the number of rotations N of the engine is a predetermined upper limit value in the medium revolving speed region, for example, 4000 rpm or smaller. When N ≤ 4000 rpm (in other words, a case of so-called medium speed running region), the decision is satisfied and the controller 114 moves to the medium speed control step at Step 400.

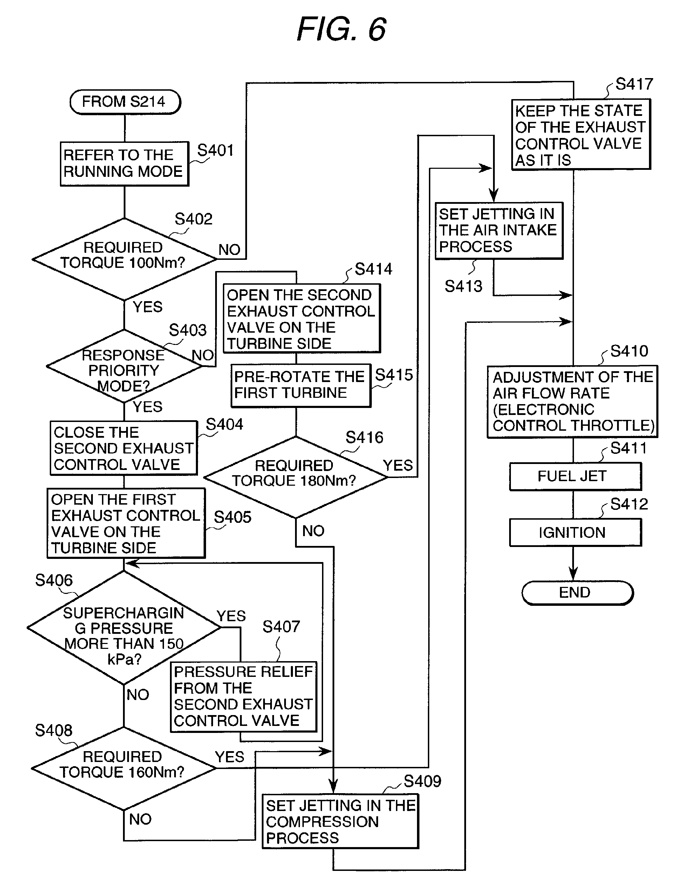

Fig. 6 is a flow chart showing the detailed procedure at Step 400. In Fig. 6, at Step 401 firstly, the controller 114 refers to the running mode decided previously at Step 204, then moves to Step 402, and decides whether the required torque is medium (for example, 100 Nm) or higher.

When the decision is satisfied, the controller 114 moves to Step 403. Then, at the time of medium speed running, a region which can be used by either of the first turbine 104a and the second turbine 105a is generated. Generally, when the first turbine 104a having a small capacity is used, compared with a case that the second turbine 105a is used, the exhaust pressure is increased and the fuel expense is increased, though the response is high, and when the second turbine 105a is used, the fuel expense is inversely low and the response is inferior to a case that the first turbine 104a is used. Therefore, at Step 403, depending on fuel expense priority or response priority of the intention of a driver, the control is different (mainly, which is to be used, the first turbine 104a or the second turbine 105a is decided and the path is selected by the exhaust control valves 106 and 107), so that the controller 114 decides whether the running mode referred to at Step 401 is the response priority mode (in other words, the acceleration priority mode) or not.

### (3-1) At the time of response priority mode (acceleration priority mode)

When the running mode is the response (acceleration) priority mode, the decision at Step 403 is satisfied and at Steps 404 and 405, the controller 114 opens the first exhaust control valve 106 on the side of the first turbine 104a and closes the second exhaust control valve 107. By this operation, the first turbine 104a rotates and the supercharging pressure of the air intake tube 112 is increased. Thereafter, at Step 406, the controller 114 decides whether the supercharging pressure reaches preset supercharging pressure (for example, 140 kPa) or not and when the decision is satisfied, the controller 114 moves to Step 407, lets a part of exhaust gas flow to the second turbine 105a from the second exhaust control valve 107, and prevents the supercharging pressure of the first turbine 104a from excessively increasing by pre-rotating the second turbine 105a. In this case, the pre-rotation is defined as that the turbine is rotated beforehand so that supercharging is not carried out practically and the response of the turbine is improved.

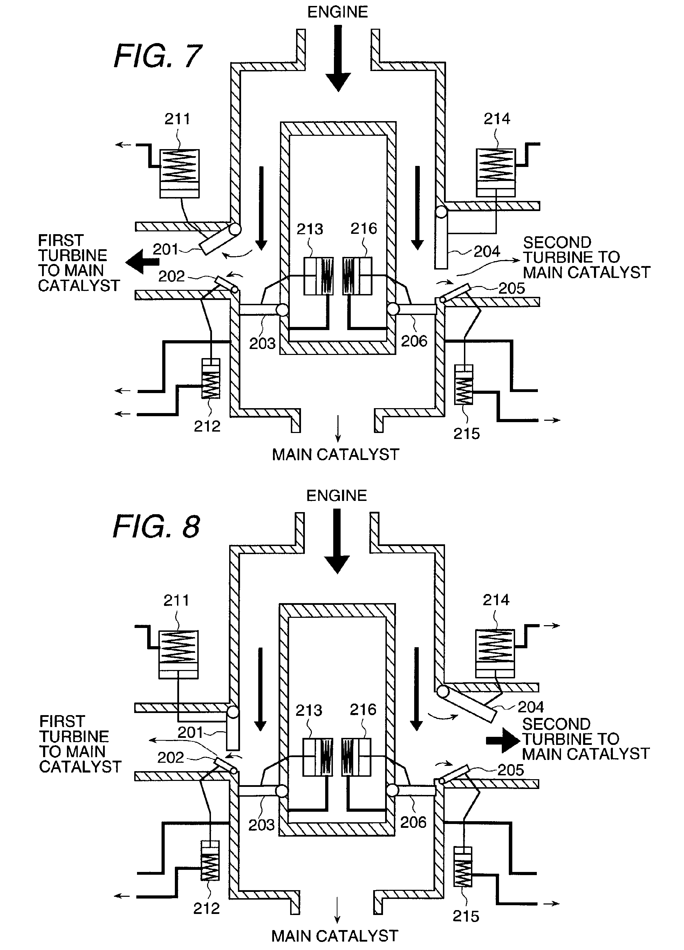

Fig. 7 is a detailed drawing showing the operation state of the first and second exhaust control valves 106 and 107 at this time. In Fig. 7, firstly, by a signal from the controller 114, negative pressure is supplied to the actuator 212 of the first auxiliary valve 202 and the first auxiliary valve 202 is opened. The opening area of the first auxiliary valve 202 is small, so that it can be opened or closed by comparatively small force. Next, negative pressure is supplied to the actuator 211 of the first main valve 201 and the first main valve 201 is opened. Since the first auxiliary valve 202 is open, the pressure difference between before and after the valve is small and the main valve 201 can be opened or closed by comparatively small force. In this way, exhaust gas from the engine 101 is supplied to the first turbine 104a of the first supercharger 104, and supercharging is carried out, and sufficient torque can be obtained. When the supercharging pressure reaches a predetermined set value, for example, 140 kPa, negative pressure is supplied to the actuator 215 of the second auxiliary valve 205 and the second auxiliary valve 205 is opened. By doing this, the second turbine 105a is pre-rotated and the response can be enhanced.

Further, when the exhaust gas flow rate is higher, the actuator 213 (or 216, the same may be said with hereinafter) is operated, and the first relief valve 203 (or the second relief valve 206) is opened, and the supercharging pressure is prevented from excessive increasing. The opening of the relief valve 203 (or 206) is controlled by the actuator 213 (or 216) so that the air intake pressure is monitored and reaches fixed pressure.

Thereafter, the controller 114 moves to Step 408 and decides whether the required torque is 160 Nm or more. When the required torque is less than 160 Nm, the decision is not satisfied and the controller 114 moves to Step 409 and sets jetting in the compression process. And, at Step 410, the controller 114 outputs a control signal to the electronic control throttle 112 so as to control the air flow rate, then jets fuel in the compression process of the cylinder 101a of the engine 101 at Step 411, generates lamination mixed gas in the cylinder 101a of the engine 101, and ignites in the cylinder 101a from the ignition plug at Step 412 so as to carry out turbo lamination combustion, thus the fuel expense can be reduced.

When the required torque is 160 Nm or more, the decision at Step 408 is satisfied and the controller 114 sets jetting in the air intake process at Step 413, outputs a control signal to the electronic control throttle 112 at Step 410 so as to control the air flow rate, and then carries out turbo homogeneous combustion in the cylinder 101a via Steps 411 and 412, thus high torque can be obtained.

### (3-2) At the time of fuel expense priority mode

On the other hand, when the running mode is the fuel expense priority mode, the decision at Step 403 is not satisfied and at Step 414, the controller 114 closes the first exhaust control valve 106 and opens the second exhaust control valve 107 on the side of the second turbine 105a. By this operation, the second turbine 105a rotates and the supercharging pressure of the air intake tube 112 is increased. Thereafter, when the supercharging pressure reaches preset supercharging pressure (for example, 140 kPa), the controller 114 moves to Step 415, lets a part of exhaust gas flow to the first turbine 104a from the first exhaust control valve 106, and prevents the supercharging pressure from excessively increasing by pre-rotating the first turbine 104a.

Fig. 8 is a detailed drawing showing the operation state of the first and second exhaust control valves 106 and 107 at this time. In Fig. 8, firstly, by a signal from the controller 114, negative pressure is supplied to the actuator 215 of the second auxiliary valve 205 and the second auxiliary valve 205 is opened. The opening area of the second auxiliary valve 205 is small, so that it can be opened or closed by comparatively small force. Next, negative pressure is supplied to the actuator 214 of the second main valve 204 and the second main valve 204 is opened. Since the second auxiliary valve 205 is open, the pressure difference between before and after the valve is small and the main valve 204 can be opened or closed by comparatively small force. In this way, exhaust gas from the engine 101 is supplied to the second turbine 105a of the second supercharger 105, and supercharging is carried out, and sufficient torque can be obtained. When the supercharging pressure reaches a predetermined set value, for example, 140 kPa, negative pressure is supplied to the actuator 212 of the first auxiliary valve 202 and the first auxiliary valve 202 is opened. By doing this, the first turbine 104a is pre-rotated and the response can be enhanced. Further, when the exhaust gas flow rate is higher, the actuator 216 (or 213, the same may be said with hereinafter) is operated, and the second relief valve 206 (or the first relief valve 203) is opened, and the supercharging pressure is prevented from excessive increasing. The opening of the relief valve 206 (or 203) is controlled by the actuator 216 (or 213) so that the air intake pressure is monitored and reaches fixed pressure.

Thereafter, the controller 114 moves to Step 416 and decides whether the required torque is 180 Nm or more. When the required torque is less than 180 Nm, the decision is not satisfied and the controller 114 moves to Step 409, sets jetting in the compression process in the same way as with the aforementioned, controls the air flow rate at Step 410, then jets fuel in the compression process at Step 411, and executes turbo lamination combustion at Step 412, thus the fuel expense can be reduced. At this time, in the fuel expense priority mode, as explained at Step 416, compared with a case of the response priority mode, the upper limit of the torque for turbo lamination combustion is increased (160 Nm → 180 Nm), so that the combustion improvement range is wider than that in the response priority mode and the fuel expense can be reduced more.

When the required torque is 180 Nm or more, the decision at Step 415 is satisfied and the controller 114 moves to Step 413, sets jetting in the air intake process in the same way as with the aforementioned, controls the air flow rate at Step 410, and then carries out turbo homogeneous combustion in the cylinder 101a via Steps 411 and 412, thus high torque can be obtained.

At Step 402 at the time of medium speed running explained above, when the required torque is less than, for example, 100 Nm, the controller 114 keeps the exhaust control valves 106 and 107 in the current state at Step 417 and goes to Step 311 and the subsequent steps leaving the state as it is.

### (4) At the time of high speed running

On the other hand, when the previous decision at Step 214 shown in Fig. 2 is not satisfied and the number of rotations N of the engine is in the high speed running region (for example, N ≥ 4000 rpm), the controller 114 moves to the high speed control step at Step 500. At the time of high speed running, when only the first turbine 104a is used, it is saturated, so that supercharging is executed by mainly using the second turbine 105a.

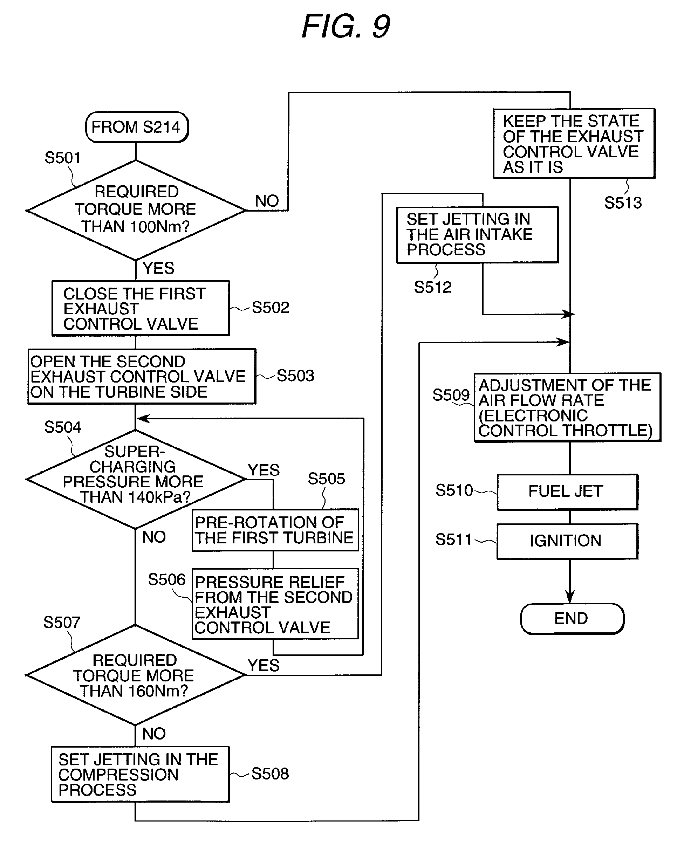

Fig. 9 is a flow chart showing the detailed procedure at Step 500. In Fig. 9, at Step 501 firstly, the controller 114 decides whether the required torque is medium (for example, 100 Nm) or higher in the same way as with the cases of low speed rotation and medium speed rotation.

When the decision is satisfied, the controller 114 moves to Step 502, closes the first control valve 106, and opens the second exhaust control valve 107 on the side of the second turbine 106 at Step 503. By this operation, the second turbine 105a rotates and the supercharging pressure of the air intake tube 112 is increased. Thereafter, at Step 504, the controller 114 decides whether the supercharging pressure reaches preset supercharging pressure (for example, 140 kPa) or not and when the decision is satisfied, the controller 114 moves to Step 505, lets a part of exhaust gas flow to the first turbine 104a from the first exhaust control valve 106, and prevents the supercharging pressure from excessively increasing by pre-rotating the first turbine. When the exhaust gas flow rate is higher, the controller 114 lets a part of exhaust gas flow on the bypass side from the second exhaust control valve 106 at Step 506 and prevents the supercharging pressure from excessively increasing. The operation state at this time is almost similar to the aforementioned shown in Fig. 8, so that detailed explanation will be omitted.

Thereafter, in the same way as with a case of medium speed running in the response priority mode, the controller 114 moves to Step 507 and decides whether the required torque is 160 Nm or more. When the required torque is less than 160 Nm, the decision is not satisfied and the controller 114 moves to Step 508 and sets jetting in the compression process. And, at Step 509, the controller 114 outputs a control signal to the electronic control throttle 112 so as to control the air flow rate, then jets fuel in the compression process of the cylinder 101a of the engine 101 at Step 510, generates lamination mixed gas in the cylinder 101a of the engine 101, and ignites in the cylinder 101a from the ignition plug at Step 511 so as to carry out turbo lamination combustion, thus the fuel expense can be reduced.

When the required torque is 160 Nm or more, the decision at Step 507 is satisfied and the controller 114 sets jetting in the air intake process at Step 512, outputs a control signal to the electronic control throttle 112 at Step 509 so as to control the air flow rate, and then carries out turbo homogeneous combustion in the cylinder 101a via Steps 510 and 511, thus high torque can be obtained.

At Step 501 at the time of high speed running explained above, when the required torque is less than, for example, 100 Nm, the controller 114 keeps the exhaust control valves 106 and 107 in the current state at Step 513 and goes to Step 509 and the subsequent steps leaving the state as it is.

As explained above, according to the first embodiment mentioned above, according to the running conditions of the engine 101, the controller 114 as a valve control means controls a plurality (two in this example) of exhaust control valves 106 and 107, selects the exhaust paths in relation to the first and second turbo superchargers 104 and 105, controls the exhaust gas flow rate, and executes a desired state of combustion (lamination combustion or homogeneous combustion) in the cylinder 101a of the engine 101.

Therefore, at the time of low speed running, when the first turbo supercharger 104 having the small capacity turbine 104a is mainly used, even if the exhaust gas flow rate is low, it is possible to sufficiently rotate the turbine 104a, carry out supercharging well responsively, and particularly in a case of low load, execute jetting in the compression process, execute lamination combustion in the cylinder 101a, and reduce the fuel expense, and in a case of high load, execute jetting in the air intake process, execute homogeneous combustion in the cylinder 101a, and improve the output. Further, at the time of high speed running, the small capacity turbine 104a of the first turbo supercharger 104 is saturated, so that supercharging is carried out by mainly using the second turbo supercharger 105 having the large capacity turbine 105a, and in a case of low load in the same way as with the aforementioned, lamination combustion is executed in the cylinder 101a and the fuel expense is reduced, and in a case of high load, homogeneous combustion is executed in the cylinder 101a and the output is improved equally with an ordinary turbo engine. Furthermore, at the time of medium speed running, supercharging is carried out by mainly using the first turbo supercharger 104 or the second turbo supercharger 105 depending on whether the running mode is the response priority mode or the fuel expense priority mode, and in a case of low load, jetting in the compression process is executed and the fuel expense is reduced by lamination combustion, and in a case of high load, jetting in the air intake process is executed and the output is improved by homogeneous combustion.

The above effects will be explained more in detail using a comparison example.

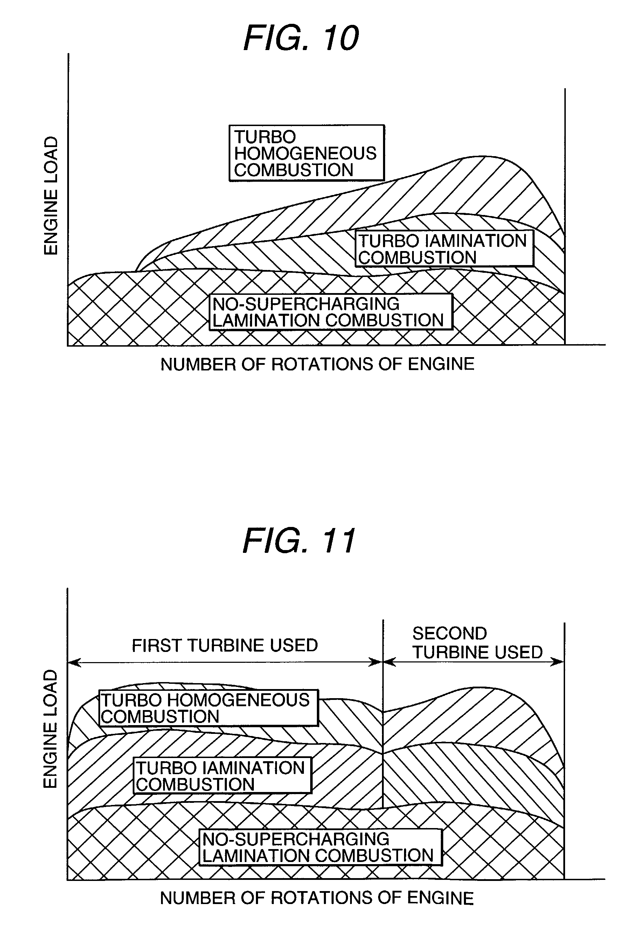

As a comparison example with this embodiment, a case that a turbo supercharger having one conventional turbine having a comparatively large capacity is applied to a direct jet engine having a mechanism for jetting fuel directly into the cylinder will be considered. Fig. 10 is a drawing showing the running region on the number of rotations - torque map in this comparison example.

As shown in Fig. 10, in this comparison example, it is found that in the high speed (large number of rotations) region, by carrying out sufficient supercharging, the fuel expense reduction effect by turbo lamination combustion and the output improvement effect by turbo homogeneous combustion can be obtained, while in the low speed (small number of rotations) region, the capacity of the turbine is too large to carry out sufficient supercharging, so that sufficient turbo lamination combustion and turbo homogeneous combustion cannot be executed and neither fuel expense reduction effect nor output improvement effect can be obtained.

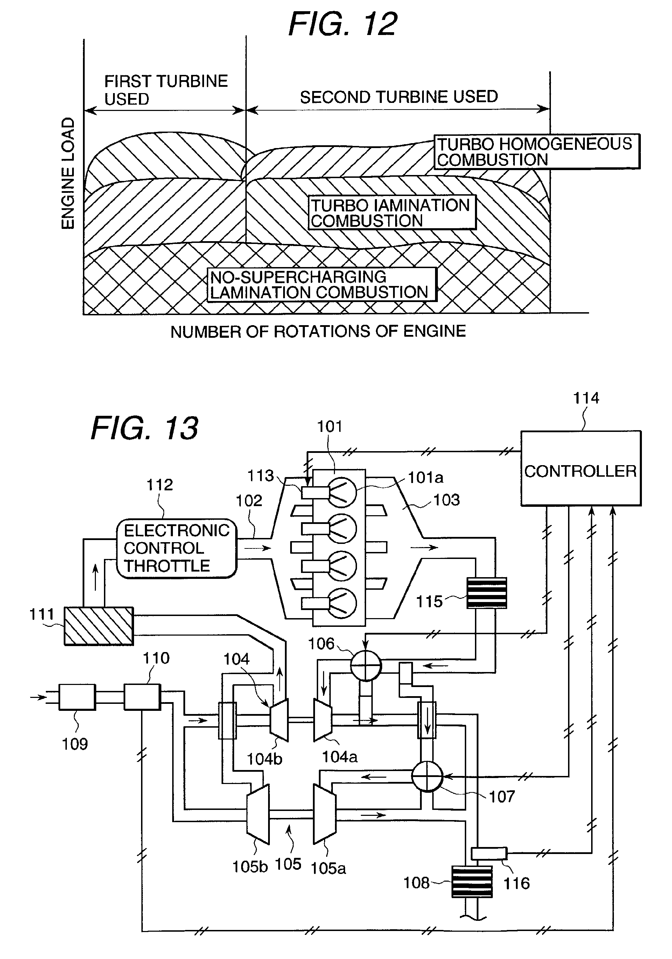

On the other hand, Figs. 11 and 12 are drawings respectively showing the running region on the number of rotations - torque map in the response priority mode and fuel expense priority mode of the aforementioned embodiment.

As shown in Figs. 11 and 12, in this embodiment, compared with the comparison example shown in Fig. 10, it is found that even in the low speed (small number of rotations) region, sufficient supercharging is efficiently carried out by the first turbine 104a, and turbo lamination combustion and turbo homogeneous combustion are executed, and the fuel expense reduction effect and output improvement effect are obtained and particularly in the fuel expense priority mode shown in Fig. 12, it is found that the region that the second turbine 105a is used is wide and the turbo lamination combustion region is also large.

Further, in the medium speed (small number of rotations) region, it is found that in the response priority mode shown in Fig. 11, the first turbine 104a is used and the turbo homogeneous combustion region is comparatively wide, and in the fuel expense priority mode shown in Fig. 12, the second turbine 105 is used and the turbo lamination combustion region is comparatively wide, and compared with the comparison example shown in Fig. 10 using the single capacity turbine, it is found that in correspondence to the purpose of response priority or fuel expense priority, an optimal turbine is selected and an optimal combustion state is executed.

As mentioned above, according to this embodiment, until the time of high speed running of the engine 101 from the time of low speed running via the time of medium speed running, in all cases, the supercharging function is fulfilled sufficiently, and a desired state of combustion (lamination combustion or homogeneous combustion) is executed, and output improvement or fuel expense reduction can be realized.

Further, as shown in the aforementioned comparison example, for example, when one turbine is intended to cover a wider range as far as possible from the low speed rotation region to the high speed rotation region, from the viewpoint of control accuracy improvement, the clearance between the turbine and the housing must be manufactured very small and accurately. On the other hand, in this embodiment, as mentioned above, the controller 114 controls the switching operation of the exhaust control valves 106 and 107 and switches the turbo superchargers 104 and 105 to be mainly used according to the running conditions of the engine 101, thus an optimal desired state of combustion can be executed. Therefore, the turbine 105a having a comparatively large capacity of the second turbo supercharger 105 is manufactured with comparatively low accuracy such that the clearance between the turbine 105a and the housing is 1.5 times or more of the clearance between the turbine 104a of the first turbo supercharger 104 and the housing and even in such a constitution, sufficient supercharging can be carried out. Therefore, an effect can be produced that the manufacturing cost can be reduced in correspondence to a reduction in the manufacturing accuracy of the second turbo supercharger 105.

Furthermore, in this embodiment, the capacity of the first turbine 104a is structured so as to be 1/2 to 1/5 of the capacity of the second turbine 105a. When the turbine is miniaturized like this, the cost of the first turbine is suppressed to about 2/3 of that of the second turbine and cut-down of cost can be realized.

The first embodiment mentioned above is not limited to the aforementioned constitution and can be deformed variously within a range which is not deviated from the object and technical thought thereof. The deformation examples will be explained hereunder.

Fig. 13 is a system block diagram showing the whole rough constitution of a deformation example of the first embodiment mentioned above and it is a drawing corresponding to Fig. 1. In Fig. 13, the deformation example is different from the first embodiment in that the auxiliary catalyst 115 is attached to the exhaust tube 103 immediately behind the engine 101. By doing this, the distance between the engine 101 and the auxiliary catalyst 115 can be shortened, so that temperature rise and activation of the auxiliary catalyst 115 are expedited and early purification of exhaust gas can be promoted.

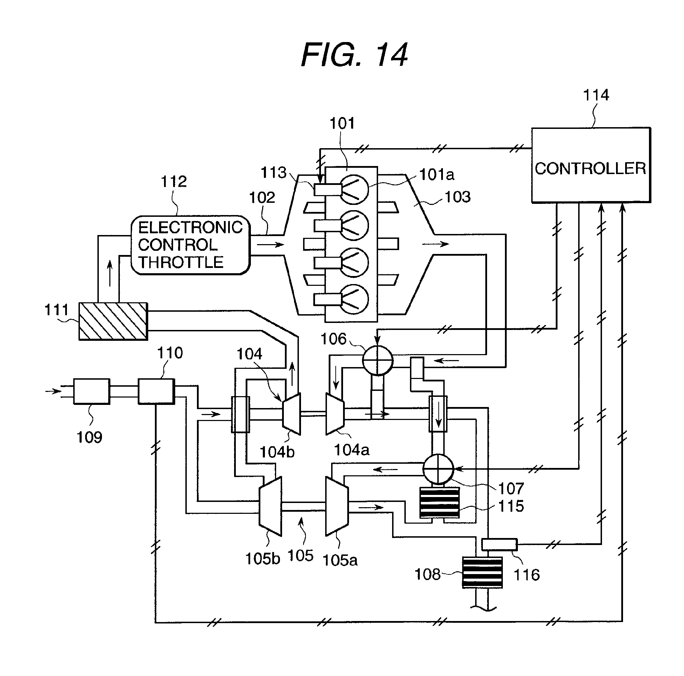

Fig. 14 is a system block diagram showing the whole rough constitution of a deformation example of the first embodiment mentioned above and it is a drawing corresponding to Fig. 1. In Fig. 14, the deformation example is different from the first embodiment in that the auxiliary catalyst 115 is attached to the part of the exhaust tube 103 which bypasses the second turbine 105a.

By doing this, for example, at the time of warming-up of the engine 101, the first exhaust control valve 106 is closed and the second exhaust control valve 107 is opened on the bypass side, thus unless the energy held by exhaust gas of the engine 101 is absorbed by the turbines 104a and 105a, the auxiliary catalyst 115 can be early raised in temperature and activated and early purification of exhaust gas can be promoted.

Further, in the first embodiment mentioned above, the two superchargers, that is, both first turbo supercharger 104 and second turbo supercharger 105 are turbo superchargers. However, the embodiment is not limited to it and for example, in place of the first turbine 104a, other supercharging mechanisms (machine superchargers) may be used. These cases also can produce the same effect.

Furthermore, in the aforementioned embodiment, the number of turbines is 2. However, the embodiment is not limited to it and depending on the size of the engine 101, three or more turbines are installed and the turbines are selectively operated as required by switching the respective exhaust control valves, thus the effects mentioned above can be produced. In other words, if a function for "operating two or more supercharges having a different capacity almost selectively" is provided, the connection state of the exhaust tube and the function of exhaust control valves are not always limited to the types explained in the first embodiment.

Further, the present invention is not limited to a system having two or more turbines and for example, if the acceleration response from low speed or low load when the exhaust gas flow rate is low is good, and the exhaust pressure does not rise excessively at the time of high speed, and the air intake rate can be ensured sufficiently, there is no need always to install two turbines. Such an embodiment will be explained hereunder.

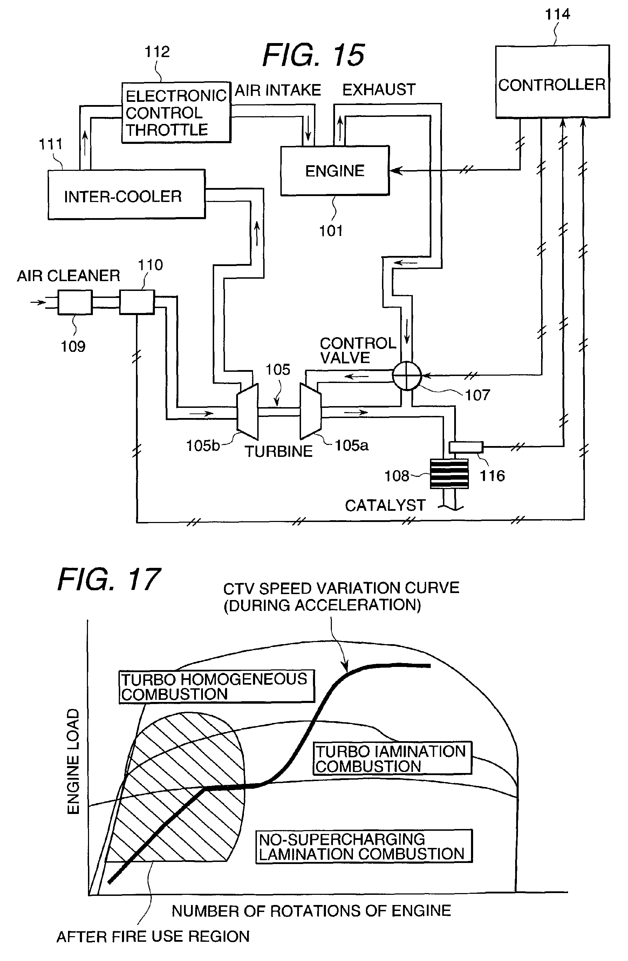

The second embodiment of the present invention will be explained by referring to Figs. 15 to 17. This embodiment is an embodiment for using one turbine having a comparatively large capacity and intending to obtain a satisfactory supercharging function in a wide region in the same way as with the first embodiment.

Fig. 15 is a conceptual system block diagram showing the whole rough constitution of the engine supercharging system of this embodiment. The same numerals are assigned to the same parts as those shown in Fig. 1 and the explanation will be omitted properly.

In Fig. 15, in this embodiment, the first turbo supercharger 104 shown in the first embodiment is omitted and only the second turbo supercharger 105 is used. Further, according to it, the first exhaust control valve 106 and the auxiliary catalyst 115 are also omitted.

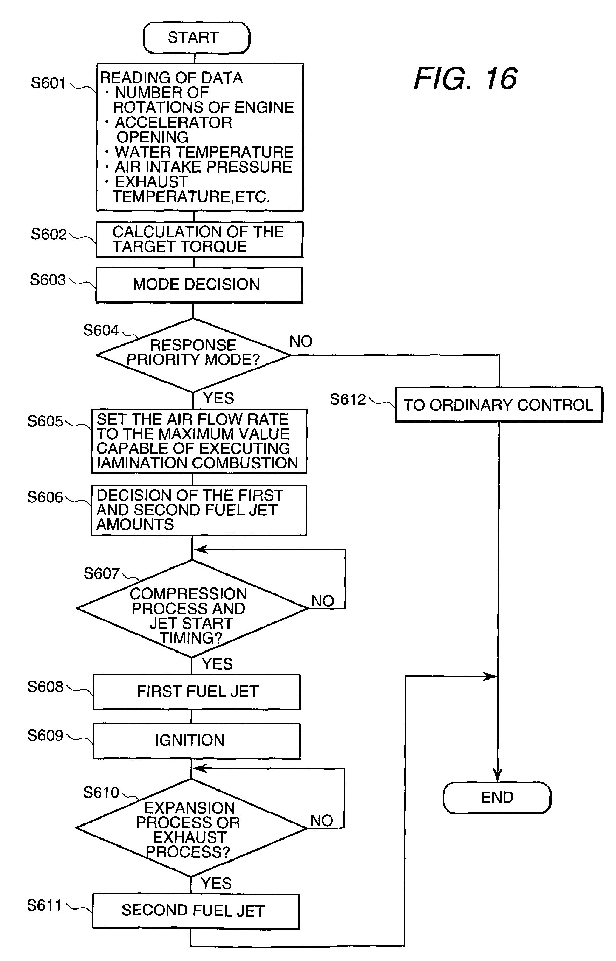

Fig. 16 is a flow chart showing the control procedure for the engine 101 and the second exhaust control valve 117 by the controller 114 as a jet control means provided in this embodiment, which is a drawing equivalent to Fig. 2 of the first embodiment.

In Fig. 16, the controller 114, firstly at the Step 601, in the same way as with Steps 201 and 202 in the first embodiment, reads state amount information relating to the operation such as the number of rotations of the engine 101, accelerator opening, temperature of cooling water for the engine 101, pressure of intake air, temperature of exhaust gas, gear operation position, and car speed from the detection means and performs arithmetic on the target torque at Step 602. Thereafter, the controller 114, at the Step 603, in the same way as with Step 204 in the first embodiment, judges the magnitude of the torque requested by a driver and when the request torque is large, sets the response priority mode and when the request torque is small and the change thereof is small, sets the fuel expense priority mode (the mode change-over switch may be used). And, at Step 604, the controller 114 refers to the running mode decided at Step 603 and then decides whether the mode is the response priority mode (in other words, the acceleration priority mode) or not.

When the running mode is response (acceleration) priority, the decision at Step 604 is satisfied and the controller 114, at Step 605, adjusts the electronic control throttle 112 shown in Fig. 1 so as to take the maximum air flow rate capable of executing lamination combustion within the range for satisfying the required torque in the cylinder.

Thereafter, at Step 606, the controller 114 decides the first fuel jet amount corresponding to the air flow rate and then sets the fuel amount capable of burning using the residual air as a second fuel jet amount. For example, the air-fuel ratio of ideal mixture for homogeneous combustion is about 14.7. However, assuming that the air-fuel ratio as a result of the first jet amount for satisfying the required torque is about 29.4, also in the second fuel jet, fuel of the same amount is jetted and the total air-fuel ratio of the first and second fuel jets is controlled to about 14.7.

And, after the compression process is set at Step 607, the controller 114 executes the first fuel jet for the cylinder of the engine 101 at Step 608, generates lamination mixed gas in the cylinder, ignites in the cylinder from the ignition plug at Step 609, executes turbo lamination combustion, and obtains engine torque.

Thereafter, after the expansion process (or the exhaust process) is set at Step 610, the controller 114 executes the second fuel jet for the cylinder of the engine 101 at Step 611. When the above procedure is finished, the controller 114 ends this flow. This control is executed every cycle or intermittently every a predetermined number of cycles.

Further, when the running mode is the fuel expense priority mode at Step 604 mentioned above, the controller 114 does not execute the second jet control at Steps 605 to 611 and executes the ordinary control at Step 612.

The operation effects of this embodiment having such a constitution will be explained hereunder.

As described in the first embodiment, generally, when the small capacity turbine is used, the response at the time of low speed running is improved, while at the time of high speed running, the exhaust pressure is increased and the fuel expense is increased, and when the large capacity turbine is used, the response at the time of low speed running is inferior to that of the small capacity turbine.

Therefore, in this embodiment, one large capacity turbine 105a is used and the controller 114 executes the first fuel jet in the compression process of the cylinder and obtains engine torque and then executes the second fuel jet in the expansion process (or the exhaust process) of the cylinder. The fuel jetted in the second time does not become engine torque, though it has a function for burning in the high-temperature cylinder (or the exhaust tube) and increasing the energy of exhaust gas, so that the number of rotations of the turbine 105a can be increased early, thus even when the large capacity turbine is used as mentioned above, the response at the time of low speed running can be improved and the chance of turbo lamination combustion during running can be increased.

A drawing that an example of a number of rotations - torque characteristic which is realizable as a result of the aforementioned control is shown as a running region on a number of rotations - torque map is shown in Fig. 17 (a CVT speed variation curve during acceleration is also shown). Fig. 17 is almost equivalent to Fig. 1 in the first embodiment.

As shown in Fig. 17, also in this embodiment, in the same way as with the first embodiment, in a case of low speed running and low load, fuel is jetted in the compression process, and lamination combustion is carried out in the cylinder, and the fuel expense is reduced, and in a case of high load, fuel is jetted in the air intake process, and homogeneous combustion is carried out in the cylinder, and the output is improved, and in a case of high speed running and low load, lamination combustion is carried out in the cylinder, and the fuel expense is reduced, and in a case of high load, homogeneous combustion is carried out in the cylinder, and the output is improved. Namely, in both cases of low speed running of the engine and high speed running, the supercharging function is fulfilled sufficiently and output improvement and fuel expense reduction can be realized.

According to the present invention, in both cases of low speed running of the engine and high speed running, the supercharging function is fulfilled sufficiently and output improvement and fuel expense reduction can be realized.

## Claims

1. An engine supercharging system, comprising:
an engine (101) having a jet mechanism for directly jetting fuel into a cylinder (101a),
at least two supercharging mechanisms (104, 105) including a first supercharging mechanism (104) for supercharging said engine (101) at a time of low speed rotation and a second supercharging mechanism (105) for supercharging at a time of high speed rotation,
a plurality of exhaust control valves (106, 107) for selecting exhaust paths relating to said first and second supercharging mechanisms (104, 105) and controlling an exhaust gas flow rate, and
valve control means (114) for controlling a switching operation of said exhaust control valves (106, 107) so as to realize desired combustion of either of lamination combustion for jetting and burning fuel in a compression process of said cylinder (101a) and homogeneous combustion for jetting and burning fuel in an air intake process of said cylinder (101a) using at least desired one of said first and second supercharging mechanisms (104, 105) according to operation conditions of said engine (101).

2. An engine supercharging system, comprising:
an engine (101) having a jet mechanism for directly jetting fuel into a cylinder (101a),
at least two supercharging mechanisms (104, 105) including a first supercharging mechanism (104) for supercharging said engine at a time of low speed rotation and a second supercharging mechanism (105) for supercharging at a time of high speed rotation,
a plurality of exhaust control valves (106, 107) for selecting exhaust paths relating to said first and second supercharging mechanisms (104, 105) and controlling an exhaust gas flow rate, and
valve control means (114) for controlling a switching operation of said exhaust control valves (106, 107) so as to realize desired combustion of either of lamination combustion for jetting and burning fuel in a compression process of said cylinder (101a) and homogeneous combustion for jetting and burning fuel in an air intake process of said cylinder (101a) using at least desired one of said first and second supercharging mechanisms (104, 105) according to a number of rotations and load of said engine (101).

3. An engine supercharging system according to Claim 1 or 2, wherein at least said two supercharging mechanisms (104, 105) are turbo chargers and a capacity of said first supercharging mechanism (104) is between 1/5 and 1/2 of a capacity of said second supercharging mechanism (105).

4. An engine supercharging system according to Claim 1 or 2, wherein at least said two supercharging mechanisms (104, 105) are turbo chargers and a clearance between a turbine and a housing of said second supercharging mechanism (105) is 1.5 times or more of a clearance between a turbine and a housing of said first supercharging mechanism (104).

5. An engine supercharging system according to any of Claims 1 to 4, wherein said system further has selection means for selecting an acceleration priority mode or a fuel expense priority mode by a driver and said valve control means (114) controls said switching operation of said exhaust control valves (106, 107) according to selection results of said selection means.

6. An engine supercharging system according to any of Claims 1 to 4, wherein said system further has judgment means for detecting state amount information relating to said driving operation and judging an intention of a driver from said information and said valve control means (114) controls said switching operation of said exhaust control valve (106, 107) according to said intention of said driver judged by said judgment means.

7. An engine supercharging system according to any of Claims 1 to 6, wherein said system further has a main catalyst (108) connected to said exhaust path and an auxiliary catalyst (115) mainly used at a start time of said engine (101) and said valve control means (114) controls said plurality of exhaust control valves (106, 107) so as to supply exhaust gas to said main catalyst (108) or said auxiliary catalyst (115) in priority by bypassing at least said two supercharging mechanisms (104, 105) at a start time of said engine (101) or at a time of low temperature.

8. An engine supercharging system according to any of Claims 1 to 6, wherein said system further has a main catalyst (108) connected to said exhaust path and an auxiliary catalyst (115) mainly used at a start time of said engine (101) and said auxiliary catalyst (115) is arranged in a path of said exhaust path which bypasses said first supercharging mechanism (104).

9. An engine supercharging system according to any of Claims 1 to 6, wherein said system further has a main catalyst (108) connected to said exhaust path and an auxiliary catalyst (115) mainly used at a start time of said engine (101) and said auxiliary catalyst (115) is arranged in a path of said exhaust path which bypasses said second supercharging mechanism (105).

10. An engine supercharging system according to Claim 1 or 2, wherein said first supercharging mechanism (104) is a machine supercharger and said second supercharging mechanism (105) is a turbo charger.

11. An engine supercharging system, comprising:
an engine (101) having a jet mechanism for directly jetting fuel into a cylinder (101a),
at least one supercharging turbine mechanism (104; 105), and jet control means for controlling said jet mechanism so as to execute at least two times of fuel jet including a first fuel jet in an air intake process of said cylinder (101a) or a compression process and a second fuel jet in an expansion process of said cylinder (101a) or an exhaust process every cycle or intermittently every a predetermined number of cycles.
